# EUROPÄISCHE PATENTANMELDUNG

(11) **EP 2 527 674 A2**
(43) Veröffentlichungstag der Anmeldung: **28.11.2012**
(21) Anmeldenummer: 12169305.5
(22) Anmeldetag: 24.05.2012
(51) Int. Cl.: F16C 29/00

(54) **Profilschienenwagen mit einem Ausgleichsbauteil**

(30) Priorität: 24.05.2011 DE 102011076327
(71) Anmelder: Aktiebolaget SKF, 41 550 Göteborg (SE)
(72) Erfinder: Edelmann, Ludwig, 97717 Sulzthal (DE); Gransow, Anita, 97526 Sennfeld (DE); Hofmann, Joachim, 97456 Dittelbrunn (DE); Jeschka, Erwin, 97711 Maßbach (DE); Kemmer, Martin, 97440 Werneck (DE); Velde, Henryk, 97440 Werneck (DE)
(74) Vertreter: Schonecke, Mitja

(57) **Zusammenfassung**

Ein Ausführungsbeispiel eines Profilschienenwagens (160) umfasst einen Führungswagen (210) mit einer Montagefläche (340) zum mechanischen Verbinden des Führungswagens (210) mit einem anderen Bauteil (290), wobei der Führungswagen (210) in der Montagefläche (340) eine Ausnehmung (320) aufweist, wobei die Ausnehmung (320) entlang einer parallel zu der Montagefläche verlaufenden ersten Richtung (330) ein kreisbogenförmiges Profil aufweist, oder wobei die Ausnehmung (320) entlang der ersten Richtung (330) in einem Bodenbereich in wenigstens einem Abschnitt ein Profil aufweist, das gegenüber der Montagefläche (340) geneigt ist und mit dieser einen Winkel einschließt, der 30° nicht übersteigt, sodass in die Ausnehmung (320) ein Ausgleichsbauteil (360) mit einer weiteren Montagefläche (370) und mit einem dem Profil der Ausnehmung (320) des Führungswagens (210) entsprechenden Profil einsetzbar ist, sodass durch ein Ausrichten des Ausgleichsbauteils (360) zu dem Führungswagen (210) ein Winkel und/oder ein Abstand zwischen der Montagefläche (340) und der weiteren Montagefläche (370) anpassbar ist.

## Beschreibung

Ausführungsbeispiele betreffen einen Profilschienenwagen mit einem Ausgleichsbauteil.

Linearführungen werden in einem weiten Bereich der Technik eingesetzt. Sie können beispielsweise zur Führung einer linearen Bewegung eines Bauteils bezüglich eines anderen Bauteils einer Maschine, jedoch auch zur Führung linearer Bewegungen größerer Baugruppen oder ganzer Maschinen verwendet werden.

Eine Untergruppe der Linearführung stellt hierbei die Profilschienenführungen dar, bei denen ein oder mehrere Profilschienenwagen auf einer oder mehreren Profilschienen laufen und so die betreffende Linearbewegung führen bzw. lagern. Hierbei werden im Allgemeinen unter "linear an Bewegungen" nicht nur solche verstanden, die in einem mathematischen Sinne linear, also entlang einer Geraden verlaufen, sondern vielmehr alle eindimensionalen Bewegungen entlang einer Linie.

Profilschienenführungen können hierbei sowohl auf Basis einer Wälzlagertechnik als auf Basis einer Gleitlagertechnik umgesetzt werden. Im Falle einer Wälzlagertechnik-basierten Profilschienenführung wird häufig in den Profilschienenwagen ein umlaufender Kanal zur Führung der Wälzkörper vorgesehen, der eine kontinuierliche Zuführung der Wälzkörper in einen Lastbereich des Profilschienenwagens ermöglicht. Hierdurch kann eine Bewegung des Profilschienenwagens auf der Profilschiene im Prinzip unbeschränkt erfolgen. In einem solchen Fall wird auch von einem unbeschränkten Hub oder einer unbeschränkten Amplitude gesprochen.

Profilschienenführungen werden häufig bei größeren Maschinen oder Baugruppen zum Einsatz gebracht. Hierbei können einzelne Baugruppen oder Maschinenteilen durchaus aufgrund ihrer Masse und/oder ihrer räumlichen Ausdehnung ein Maß erreichen, welches den Einsatz mehrerer Profilschienenwagen ratsam erscheinen lassen. Hierbei können je nach konkretem Einsatz beispielsweise eine gemeinsame Profilschiene oder aber auch mehrere Profilschienen zum Einsatz kommen, die beispielsweise parallel angeordnet sind.

Im Falle der Verwendung mehrerer Profilschienen können diese beispielsweise auf einem gemeinsamen Bauteil, beispielsweise einer Basisplatte, mechanisch fixiert werden. Unabhängig davon, ob eine oder mehrere Profilschienen verwendet werden, können aber auch die mit den Profilschienenwagen mechanisch miteinander verbunden werden. Hierzu kann beispielsweise eine gemeinsame Basisplatte verwendet werden.

Beim Einbau von Profilschienenwagen kann es daher dazu kommen, dass diese Umgebungsteile, also beispielsweise die zuvor genannten Basisplatten, nicht eben sind oder sich hinsichtlich ihrer Höhe oder anderer Abmessungen der Art unterscheiden und voneinander verschieden sind, dass eine Montage der Maschine insgesamt erschwert, wenn nicht sogar unmöglich wird. Auch können durch Lasten oder andere statische Kräfte die Anbauteile bereits bei der Montage verbiegen oder verformen. So können beim Festschrauben der Profilschienenwagen gegebenenfalls unbeabsichtigte innere Vorspannungen oder Deformationen entstehen, welche die Lebensdauer des Gesamtsystems reduzieren können. Solche Vorschäden oder Vorschädigungen können gegebenenfalls ebenso die Laufruhe negativ beeinflussen, im Grenzfall sogar zum sofortigen Bruch der betreffenden Komponenten führen

Die zuvor genannten Umgebungsteile, also beispielsweise die Basisplatten oder andere Bauteile für Profilschienenführungen werden darüber hinaus häufig relativ genau, also mit engen Toleranzen und/oder einer hohen Präzision gefertigt. Darüber hinaus kann es ratsam sein, diese steif auszuführen, um eine gleichmäßige Kraftverteilung zu gewährleisten. Dies kann gegebenenfalls zu entsprechend hohen Kosten für die Komponenten führen.

Konventionelle werden solche Ungenauigkeiten, die beim Einbau bzw. bei der Montage komplexer Maschinen auftreten können, häufig billigend in Kauf genommen und/oder mithilfe von rechnerischen Reduktionsfaktoren bei der Planung versucht zu kompensieren. Ebenso werden gegebenenfalls entsprechende Gegenbauteile, welche den entsprechenden Deformationen angepasst sind und eine entsprechende Genauigkeit aufweisen, gefertigt und während des Zusammenbaus bzw. der Montage der Maschine eingebaut.

Ausgehend hiervon besteht daher ein Bedarf daran, eine Montage eines komplexeren, mehrachsigen Linearsystems zu vereinfachen.

Diesem Bedarf werden durch einen Profilschienenwagen gemäß Patentanspruch 1 oder ein Verfahren zur Montage eines Linearsystems gemäß Patentanspruch 10 Rechnung getragen.

Ein Profilschienenwagen gemäß einem Ausführungsbeispiel, der ausgebildet ist, um auf einer Profilschiene linear beweglich angeordnet zu werden, umfasst einen Führungswagen mit einer Montagefläche zum mechanischen Verbinden des Führungswagens mit einem anderen Bauteil, wobei der Führungswagen in der Montagefläche eine Ausnehmung aufweist, wobei die Ausnehmung entlang einer parallel zu der Montagefläche verlaufenden ersten Richtung ein kreisbogenförmiges Profil aufweist, oder wobei die Ausnehmung entlang der ersten Richtung in einem Bodenbereich in wenigstens einem Abschnitt ein Profil aufweist, das gegenüber der Montagefläche geneigt ist und mit dieser einen Winkel einschließt, der 30° nicht übersteigt, sodass in die Ausnehmung ein Ausgleichsbauteil mit einer weiteren Montagefläche und mit einem dem Profil der Ausnehmung des Führungswagens entsprechenden Profil einsetzbar ist, sodass durch ein Ausrichten des Ausgleichsbauteils zu dem Führungswagen ein Winkel und/oder ein Abstand zwischen der Montagefläche und der weiteren Montagefläche anpassbar ist.

Ein Verfahren zur Montage eines Linearsystems mit einem weiteren Bauteil gemäß einem Ausführungsbeispiel umfasst ein Bereitstellen wenigstens einer Profilschiene, ein Bereitstellen eines ersten und eines zweiten Profilschienenwagens auf der wenigstens einen Profilschiene, wobei wenigstens der zweite Profilschienenwagen ein Profilschienenwagen gemäß einem der vorhergehenden Ansprüche ist und ein Ausgleichsbauteil umfasst, ein Verbinden des weiteren Bauteils mit einer Montagefläche des ersten Profilschienenwagens, und ein Ausrichten des Ausgleichsbauteils des zweiten Profilschienenwagens, um das weitere Bauteil mit der weiteren Montagefläche des zweiten Profilschienenwagens mechanisch zu verbinden, nachdem das weitere Bauteil mit der Montagefläche des erste Profilschienenwagens verbunden wurde und ohne dass die mechanische Verbindung zwischen dem weiteren Bauteil und der Montagefläche des ersten Profilschienenwagens gelöst wird.

Ausführungsbeispielen liegt hierbei die Erkenntnis zu Grunde, dass durch den Einsatz des Ausgleichsbauteils ein Winkel und/oder ein Abstand zwischen der Montagefläche des Führungswagens und der weiteren Montagefläche des Ausgleichsbauteils anpassbar ist. Hierdurch ist es möglich, die bei konventionellen Lösungen billigend in Kauf genommene, mithilfe von rechnerischen Reduktionsfaktoren berücksichtigte oder durch Anfertigung entsprechender Gegenbauteile ausgeglichene Abweichungen durch das Ausgleichsbauteil zu umgehen. Hierdurch kann eine Montage und/oder eine Konstruktion einer Maschine, welche den Profilschienenwagen gemäß einem Ausführungsbeispiel umfasst, dadurch vereinfacht werden, dass eine Berücksichtigung dieser Fehlerquellen entfallen, zumindest jedoch reduziert werden kann. So ist es möglich, durch ein Ausrichten des Ausgleichsbauteils eine mechanische Verbindung zwischen dem Profilschienenwagen und dem betreffenden Bauteil zu schaffen, nachdem das weitere Bauteil bereits mit der Montagefläche eines ersten Profilschienenwagens verbunden wurde und ohne dass diese mechanische Verbindung wieder gelöst werden muss.

Bei einem Ausführungsbeispiel, bei dem die Ausnehmung entlang der ersten Richtung in dem Bodenbereich in wenigstens dem einen Abschnitt ein Profil aufweist, das gegenüber der Montagefläche geneigt ist und mit dieser einen 30° nicht übersteigenden Winkel einschließt, kann der Profilschienenwagen entlang einer parallel zu der Montagefläche verlaufenden zweiten Richtung, die von der ersten Richtung verschieden ist, ein kreisbogenförmiges Profil aufweisen. Hierdurch ist es möglich, nicht nur beispielsweise einen Abstand zwischen der Montagefläche des Profilschienenwagens und der weiteren Montagefläche des Ausgleichsbauteils durch eine Verschiebung des Ausgleichsbauteils entlang der ersten Richtung anzupassen, sondern ebenso durch ein Verkippen bzw. Verdrehen des Ausgleichsbauteils entlang der zweiten Richtung eine Verbiegung ebenfalls kompensierbar zu machen. Bei Ausführungsbeispielen können so die erste Richtung und die zweite Richtung beispielsweise einen rechten Winkel miteinander einschließen.

Bei einem Profilschienenwagen gemäß einem Ausführungsbeispiel, bei dem die Ausnehmung entlang der ersten Richtung in dem Bodenbereich in dem Abschnitt ein Profil aufweist, das gegenüber der Montagefläche geneigt ist und mit dieser einen 30° nicht übersteigenden Winkel einschließt, kann in die Ausnehmung entlang der ersten Richtung in dem Bodenbereich einen weiteren Abschnitt mit einem Profil aufweisen, das ebenfalls gegenüber der Montagefläche geneigt ist und mit dieser einen 30° nicht übersteigenden weiteren Winkel einschließt, wobei das Profil des Abschnitts und das Profil des weiteren Abschnitts aufeinander zulaufen. Hierdurch ist es möglich, durch eine entsprechende Ausführung des Ausgleichsbauteils gegebenenfalls eine Verschiebung der weiteren Montagefläche des Ausgleichsbauteils entlang der ersten Richtung zu reduzieren, gegebenenfalls sogar vollständig zu unterbinden und dennoch eine Anpassung des Abstands zwischen der Montagefläche des Führungswagens und der weiteren Montagefläche des Ausgleichsbauteils zu ermöglichen.

So können beispielsweise bei einem solchen Ausführungsbeispiel der Abschnitt des Bodenbereichs und der weitere Abschnitt des Bodenbereichs spiegelsymmetrisch ausgestaltet sein. Ist auch das Ausgleichsbauteil entsprechend ausgestaltet, kann hierdurch gegebenenfalls eine Verschiebung der weiteren Montagefläche entlang der ersten Richtung durch die symmetrische Ausgestaltung vollständig unterbunden sein. Hierdurch kann es möglich sein, eine Belastung des Profilschienenwagens an einem Mittelpunkt zu erzielen bzw. eine gleichmäßigere Belastung des Profilschienenwagens zu erreichen, was gegebenenfalls einem Verschleiß und/oder eine Betriebssicherheit des Profilschienenwagens und des diesen umfassenden Linearsystems verbessern kann.

Bei Ausführungsbeispielen kann der zuvor genannte Winkel von 30°, den das Profil der Ausnehmung in einem Bodenbereich wenigstens in einem Abschnitt aufweist, gegebenenfalls auch geringer sein. So kann es bei Ausführungsbeispielen ratsam sein, diesen Maximalwinkel auf 20°, 15° oder 10° festzulegen. Je geringer der Winkel ist, den das Profil in den betreffenden Abschnitt mit der Montagefläche einschließt, desto feiner ist beispielsweise der Abstand zwischen der Montagefläche und der weiteren Montagefläche des Ausgleichsbauteils anpassbar. Darüber hinaus kann es beispielsweise von Vorteil sein, einen geringeren Winkel vorzusehen, wenn die betreffenden Materialien, aus denen der Profilschienenwagen und das Ausgleichsbauteil gefertigt sind, einen eher geringen Haftreibungskoeffizienten aufweisen. Durch eine Wahl eines kleineren Winkels können so über die Haftreibung gegebenenfalls einfacher entlang der ersten Richtung auftretende Kräfte von dem Ausgleichsbauteil auf den Führungswagen übertragen werden, ohne dass das

Ausgleichsbauteil sich bezüglich des Führungswagens bewegt und ohne dass eine Fixierung des Ausgleichsbauteils bezüglich des Führungswagens eingesetzt werden muss.

Andererseits wird natürlich ebenfalls mit geringerem Winkel die Möglichkeit der Anpassung des Abstands zwischen der Montagefläche des Führungswagens und der weiteren Montagefläche des Ausgleichsbauteils reduziert. Anders ausgedrückt wird, je geringer der Winkel gewählt wird, ein möglicher Hub, denen das Ausgleichsbauteil bezogen auf den Führungswagen ausführen kann, bei einer Bewegung des Ausgleichsbauteils entlang der ersten Richtung reduziert. Es kann daher ratsam sein, den oben genannten Winkel dahingehend zu wählen, dass dieser einen Mindestwinkel von wenigstens 0,5°, 1°, 2° oder 3° aufweist. Hierbei können der Maximalwinkel und der Minimalwinkel unabhängig voneinander angepasst werden. Das zuvor gesagte gilt ebenfalls für den weiteren Winkel.

Bei einem Profilschienenwagen gemäß einem Ausführungsbeispiel kann sich die Ausnehmung ausgehend von einer Seitenfläche des Führungswagens oder einer Stirnfläche des Führungswagens in diesen hinein erstrecken. Hierdurch kann es gegebenenfalls leichter möglich sein, das Ausgleichsbauteil hinsichtlich seiner Position zu dem Führungswagen auszurichten, da durch die sich von der Seitenfläche oder der Stirnfläche des Führungswagens in diesen hinein erstreckende Ausnehmung auch in einem bereits eingebauten Zustand des Führungswagens das Ausgleichsbauteils mechanisch noch zugänglich sein kann. Anders ausgedrückt kann auch im bereits eingebauten Zustand das Ausgleichsbauteil hierdurch gegebenenfalls leichter erreichbar sein.

Aufgrund der eingangs erwähnten Führung einer eindimensionalen Bewegung durch eine Profilschienenführung, die einen Profilschienenwagen gemäß einem Ausführungsbeispiel umfasst, entlang einer Bewegungsrichtung bzw. entgegen der Bewegungsrichtung ermöglicht, ist ein Profilschienenwagen typischerweise ausgebildet, um eine entsprechende Bewegung entlang einer Bewegungsrichtung oder entgegen der Bewegungsrichtung zu ermöglichen. Eine Stirnfläche des Führungswagens stellt in diesem Zusammenhang eine Fläche des Führungswagens dar, die den Führungswagen entlang der Bewegungsrichtung begrenzt. Bei einigen Ausführungsbeispielen steht diese senkrecht zu der Bewegungsrichtung. Im Unterschied hierzu stellt eine Seitenfläche des Führungswagens eine solche dar, die den Führungswagen seitlich begrenzt, nicht jedoch in einer senkrecht zu der Montagefläche stehenden Richtung. Bei einigen Ausführungsbeispielen erstreckt sich daher eine Seitenfläche des Führungswagens parallel zu der Bewegungsrichtung des Profilschienenwagens. Bei anderen Ausführungsbeispielen, bei denen der Führungswagen eine von einem Quader abweichende Grundform aufweist, können entsprechende Seiten- und Stirnflächen auch unter anderen Winkeln angeordnet werden. Seitenflächen und Stirnflächen begrenzen den Führungswagen zusammen in einer Richtung, die senkrecht auf der Montagefläche des Führungswagens steht.

Bei weiteren Ausführungsbeispielen kann sich die Ausnehmung ausgehend von der Seitenfläche oder der Stirnfläche des Führungswagens vollständig durch diesen hindurch erstrecken. Hierdurch ist es gegebenenfalls möglich, auch im eingebauten Zustand das Ausgleichsbauteil von beiden Seiten her zu erreichen. Bei Ausführungsbeispielen kann sich so die Ausnehmung beispielsweise entlang der ersten Richtung, gegebenenfalls entlang der zweiten Richtung, oder auch entlang der Bewegungsrichtung erstrecken.

Bei manchen Ausführungsbeispielen Winkel weist so die Ausnehmung und/oder der wenigstens eine Abschnitt des Profils in dem Bodenbereich entlang der ersten Richtung, dessen Profil gegenüber der Montagefläche geneigt ist, eine Länge von wenigstens 20 %, 30 % oder wenigstens 50 % einer Länge des Führungswagens entlang einer Erstreckungsrichtung der Ausnehmung, in die sich die Ausnehmung erstreckt.

Bei Ausführungsbeispielen kann die Ausnehmung als Vertiefung, Nut oder auch als Rinne ausgeführt sein.

Bei einem Profilschienenwagen gemäß einem Ausführungsbeispiel können das Ausgleichsbauteil und/oder der Führungswagen derart ausgestaltet sein, dass das Ausgleichsbauteil durch eine Sicherung gegen eine Bewegung entlang der Erstreckungsrichtung der Ausnehmung gesichert ist. Hierdurch kann es möglich sein, auch im Falle einer Erschütterung des Profilschienenwagens oder im Falle von Vibrationen ein Verrücken des Ausgleichsbauteils gegenüber dem Führungswagen zu unterbinden und hierdurch gegebenenfalls eine Veränderung des Abstands und/oder des Winkels zwischen der Montagefläche des Führungswagens und der weiteren Montagefläche des Ausgleichsbauteils zu verhindern, zumindest jedoch zu reduzieren.

Eine solche Sicherung kann bei Ausführungsbeispielen beispielsweise durch einen mechanischen Anschlag oder durch eine stoffschlüssige Verbindung, also beispielsweise durch eine Verklebung des Ausgleichsbauteils mit dem Profilschienenwagen erzielt werden, wobei ein mechanischer Anschlag beispielsweise eine Schraube umfassen kann und wobei das Ausgleichsbauteil oder der Führungswagen ein entsprechendes Gewindeloch aufweist. Bei anderen Ausführungsbeispielen kann ein Anschlag auch mithilfe einer Gewindestange und einem Anschlagsbauteil realisiert werden, wobei die Gewindestange als Teil des Führungswagens oder des Ausgleichsbauteils ausführbar ist und das Anschlagsbauteil neben einem Bauteil mit einer entsprechenden Gewindebohrung auch durch eine Mutter gebildet sein kann. Eine Sicherung kann auch beispielsweise mittels eines Sicherungsblechs realisiert sein, das mit dem Ausgleichsbauteil oder dem Führungswagen verschraubt, verklebt oder auch mit Hilfe einer anderen Verbindungstechnik befestigt wird.

Ein Profilschienenwagen gemäß einem Ausführungsbeispiel kann natürlich ebenso das Ausgleichsbauteil umfassen. Alternativ kann jedoch der Profilschienenwagen auch lediglich die zuvor definierten Ausnehmungen aufweisen, wobei der Profilschienenwagen mit unterschiedlichen Ausgleichsbauteilen bestückbar ist.

Bei einem Profilschienenwagen gemäß einem Ausführungsbeispiel kann das Ausgleichsbauteil derart mehrteilig ausgeführt sein, dass die weitere Montagefläche des Ausgleichsbauteils wenigstens zwei Abschnitte aufweist, die durch unterschiedliche Teile des Ausgleichsbauteils gebildet werden. Hierdurch kann es möglich sein, die weitere Montagefläche des Ausgleichsbauteils genauer an das weitere Bauteil anzupassen, welches mit dem Profilschienenwagen mechanisch verbunden werden soll.

Bei einem solchen Profilschienenwagen gemäß einem Ausführungsbeispiel kann die weitere Montagefläche wenigstens in einem Abschnitt entlang der ersten Richtung ein Profil aufweisen, das im Wesentlichen parallel zu der Montagefläche entlang der ersten Richtung des Führungswagens verläuft. Dies kann eine Anpassung des Abstands zwischen der Montagefläche und der weiteren Montagefläche ermöglichen.

Bei einem solchen Profilschienenwagen gemäß einem Ausführungsbeispiel kann die weitere Montagefläche in einem weiteren Abschnitt entlang der ersten Richtung ein Profil aufweisen, das zu dem Profil der Montagefläche entlang der ersten Richtung geneigt ist der weitere Abschnitt kann hierbei beispielsweise der zweite Abschnitt im Falle des mehrteilig ausgeführten Ausgleichsbauteils sein. Hierdurch kann es möglich sein, das weitere Bauteil, welches mit der weiteren Montagefläche des Ausgleichsbauteils mechanisch verbunden werden soll, gegebenenfalls zusätzlich zu stützen, wenn dieses beispielsweise neben einem Höhenversatz auch eine Krümmung oder andere Deformationen entlang der ersten Richtung aufweist.

Weitere vorteilhafte Ausgestaltungen werden nachfolgend an Hand von in den Zeichnungen dargestellten Ausführungsbeispielen, auf welche die Erfindung jedoch nicht beschränkt ist, näher beschrieben.
Fig. 1 zeigt eine Darstellung eines Linearsystems mit einem Profilschienenwagen gemäß einem Ausführungsbeispiel;
Fig. 2a zeigt eine Teilquerschnittsdarstellung durch ein Linearsystem mit einem Profilschienenwagen gemäß einem weiteren Ausführungsbeispiel;
Fig. 2b zeigt eine Querschnittsdarstellung durch den in Fig. 2a gezeigten Profilschienenwagen gemäß einem Ausführungsbeispiel;
Fig. 3 zeigt eine Teilquerschnittsdarstellung eines Linearsystems mit einem Profilschienenwagen gemäß einem weiteren Ausführungsbeispiel; und
Fig. 4 zeigt eine Querschnittsdarstellung durch einen Profilschienenwagen gemäß einem weiteren Ausführungsbeispiel.

Im Rahmen der vorliegenden Beschreibung werden zusammenfassende Bezugszeichen für Objekte, Strukturen und andere Komponenten verwendet werden, wenn die betreffende Komponente an sich oder mehrerer entsprechende Komponenten innerhalb eines Ausführungsbeispiels oder innerhalb mehrerer Ausführungsbeispiele beschrieben werden. Passagen der Beschreibung, die sich auf eine Komponente beziehen, sind daher auch auf andere Komponenten in anderen Ausführungsbeispielen übertragbar, soweit dies nicht explizit ausgeschlossen ist oder sich dies aus dem Zusammenhang ergibt. Werden einzelne Komponenten bezeichnet, werden individuelle Bezugszeichen verwendet, die auf den entsprechenden zusammenfassenden Bezugszeichen basieren. Bei der nachfolgenden Beschreibung von Ausführungsformen bezeichnen daher gleiche Bezugszeichen gleiche oder vergleichbare Komponenten. Komponenten, die mehrfach in einem Ausführungsbeispiel oder in unterschiedlichen Ausführungsbeispielen auftreten, können hierbei bezüglich einiger ihrer technischen Parameter identisch und/oder unterschiedlich ausgeführt oder implementiert werden. Es ist so beispielsweise möglich, dass mehrere Entitäten innerhalb eines Ausführungsbeispiels bezüglich eines Parameters identisch, bezüglich eines anderen Parameters jedoch unterschiedlich implementiert sein können.

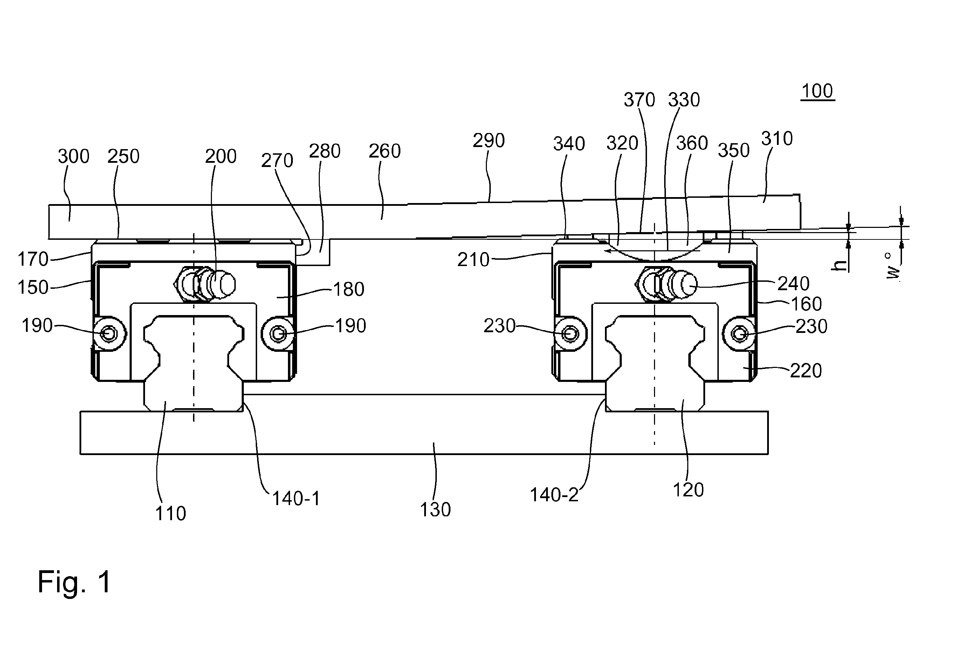

Fig. 1 zeigt eine Darstellung eines Linearsystems 100 mit einer ersten Profilschiene 110 und einer zweiten Profilschiene 120, die sich im Wesentlichen parallel, senkrecht zu der in Fig. 1 gezeigten Darstellungsebene erstrecken. Bei dem Linearsystem 100 handelt es sich genauer gesagt um ein mehrachsiges Linearsystem, wobei Ausführungsbeispiele ebenso bei einachsigen Linearsystemen zum Einsatz kommen können. Die beiden Profilschienen 110, 120 definieren hierbei durch ihre Erstreckung die Bewegungsrichtungen der beiden Profilschienenwagen 150, 160.

Die erste und zweite Profilschiene 110 sind hierbei auf einer optionalen, gemeinsamen Grundplatte 130 angeordnet und gegebenenfalls mit dieser mechanisch verbunden. Die Grundplatte 130 weist zwei optionale Flanken 140-1 und 140-2 auf, an die sich die beiden Profilschienen 110, 120 seitlich anliegenden. Die Flanken 140 können so einen seitlichen Versetzen der Profilschienen 110, 120 entgegenwirken.

Auf den beiden Profilschienen 110, 120 ist jeweils einen Profilschienenwagen beweglich angeordnet. So ist auf der ersten Profilschiene 110 ein erster Profilschienenwagen 150 und auf der zweiten Profilschiene 120 ein zweiter Profilschienenwagen 160 angeordnet, wobei der zweite Profilschienenwagen 160 als Profilschienenwagen gemäß einem Ausführungsbeispiel ausgestaltet ist, während der erste Profilschienenwagen 150 als konventioneller Profilschienenwagen ausgeführt ist.

Der erste Profilschienenwagen 150 umfasst einen Führungswagen 170 und eine Endplatte 180, die an dem Führungswagen 170 mithilfe zweier Schrauben 190 an einer Stirnseite des Führungswagens 170 befestigt ist. Die Endplatte 180 beherbergt unter anderem ein Schmierstoffreservoir, welches durch einen Schmiermittelnippel 200 befüllbar bzw. nachfüllbar ist. Darüber hinaus umfasst die Endplatte 180 ebenfalls einen Umlenkbereich für die Wälzkörper, welche in Fig. 1 durch die Endplatte 180 verdeckt sind.

Auch der zweite Profilschienenwagen 160 gemäß einem Ausführungsbeispiel umfasst einen Führungswagen 210 sowie eine Endplatte 220, die über Schrauben 230 mit dem Führungswagen 210 an seiner Stirnseite mechanisch verbunden ist und identisch zu der Endplatte 180 des ersten Profilschienenwagens 150 ausgeführt sein kann. So weist auch die Endplatte 220 einen Schmiermittelnippel 240 zur Befüllung des in der Endplatte 220 umfassten Schmiermittelreservoirs mit dem Schmiermittel auf.

Der Führungswagen 170 des ersten Profilschienenwagens 150 weist eine Montagefläche 250 auf, auf der einer Basisplatte 260 aufliegt und beispielsweise mithilfe einer in Fig. 1 nicht gezeigten Verschraubung befestigt sein kann. Darüber hinaus weist der Führungswagen 170 ferner eine seitliche Anlagefläche 270 auf, mit der ein seitlicher Anschlag 280 der Basisplatte 260 in Kontakt steht. Sowohl die Montagefläche 250 als auch die seitliche Anlagefläche 270 weisen hierbei wenigstens eine gesondert spezifizierte Eigenschaft auf, weshalb diese Flächen auch als Referenzflächen oder Anlageflächen bzw. Montageflächen bezeichnet werden. Bei diesen Eigenschaften kann es sich beispielsweise um ihre Position, also beispielsweise einen Abstand von einem Bezugspunkt auf der Profilschiene 110 handeln. Ebenso kann es sich jedoch auch um eine Oberflächenbeschaffenheit, etwa eine Rauigkeit oder einen Kraftschlusskoeffizienten handeln. Darüber hinaus kann ergänzend oder alternativ auch eine Orientierung oder geometrische Oberflächenbeschaffenheit die entsprechende Eigenschaft der Seite darstellen, also etwa eine Parallelität oder eine spezifizierte Deformationsfreiheit (z. B. maximale Wölbung).

Die Basisplatte 260 kann beispielsweise Teil eines weiteren Bauteils 290 sein, welches mithilfe der Profilschienenwagen 150, 160 entlang der beiden Profilschienen 110, 120 linear beweglich angeordnet werden soll. Das weitere Bauteil 290 kann daher als "Nutzlast" des Linearsystems 100 bezeichnet werden. Je nach konkretem Einsatzgebietes kann es sich hierbei beispielsweise um einen Detektor, um einen Aktuator oder auch um ein passives mechanisches Bauteil, eine entsprechende Baugruppe oder eine andere Maschine handeln.

Wie bereits eingangs beschrieben wurde, kann es aufgrund von Toleranzen aber auch aufgrund von Vorschädigungen dazu kommen, dass Bauteile nicht mehr eben sind oder auf andere Art und Weise von ihren Spezifikationen abweichen. So weist bei dem in Fig. 1 dargestellten Linearsystems 100 die Basisplatte 260 einen ersten Abschnitt 300 auf, der die spezifizierte Parallelität aufweist. Jedoch ist es bei der in Fig. 1 gezeigten Situation zu einer Verbiegung der Platte 260 gekommen, sodass diese in einen zweiten Abschnitt 310 nicht mehr parallel zu dem ersten Abschnitt 300 verläuft. Vielmehr weist der zweite Abschnitt 310 in gegenüber dem ersten Abschnitt 300 einen Winkel w auf, der sich aufgrund der Längenverhältnisse der beiden Abschnitte 300, 310 zueinander ebenfalls in einem Höhenunterschied h niederschlägt.

Um eine Adaption an die verbogene Platte 260 zu ermöglichen, wird bei dem Linearsystems 100 als zweiter Profilschienenwagen 160 ein Ausführungsbeispiel eingesetzt. So weist dieser in dem Führungswagen 210 eine Ausnehmung 320 auf, die entlang einer ersten Richtung 330 ein kreisbogenförmiges bzw. kreisbogenförmiges Profil aufweist. Die erste Richtung 330 verläuft hierbei (im Wesentlichen) parallel zu einer Montagefläche 340 des Führungswagens 210, die auch alternativ oder ergänzend ebenfalls zur Montage einsetzbar ist. Die Ausnehmung kann beispielsweise in einem Bereich der Montagefläche 340 eines konventionellen Profilschienenwagens 150 angeordnet sein, die beispielsweise nicht besonders bearbeitet ist, also beispielsweise eine abweichende Oberflächenbeschaffenheit, eine weniger gut definierte Lage oder Ausrichtung aufweist. Sie kann also in einem Bereich angeordnet sein, der bei einem konventionellen Profilschienenwagen nicht verwendet wird, also keiner speziellen Funktion dient.

Ein Profilschienenwagen gemäß einem Ausführungsbeispiel ermöglicht so eine Montage mit oder ohne ein Ausgleichsbauteil. Wäre also die Basisplatte 260 nicht verbogen, so wie dies in der in Fig. 1 gezeigten Situation der Fall ist, könnte eine Montage mithilfe des zweiten Profilschienenwagens 160 auch über die Montagefläche 340 erfolgen. So gilt im Hinblick auf die Montagefläche 340 und eine ebenfalls optional implementierte seitliche Anlagefläche, die jedoch als solche in Fig. 1 nicht bezeichnet ist, das zuvor gesagte zu der Montagefläche 250 und des seitlichen Anlagefläche 200 sich des ersten Profilschienenwagens 150.

Die erste Richtung 330 erstreckt sich bei dem in Fig. 1 gezeigten Linearsystem 100 darüber hinaus senkrecht zu der durch die Orientierung der Profilschienen 110, 120 gegebenen Bewegungsrichtung. Bei anderen Ausführungsbeispielen kann sich die erste Richtung 330 jedoch auch in andere Richtungen, beispielsweise entlang der Bewegungsrichtung erstrecken, wie in den nachfolgend beschriebenen Ausführungsbeispielen noch gezeigt wird.

Die Ausnehmung 320 ist bei dem in Fig. 1 gezeigten Ausführungsbeispiel eines Profilschienenwagens 160 ausgehend von einer Stirnfläche 350 des Führungswagens 210 ausgeführt. Hierdurch ist es möglich, ein in die Ausnehmung 320 eingebrachtes Ausgleichsbauteil 360 auch im eingebauten Zustand noch mechanisch zu erreichen und beispielsweise mithilfe einer in Fig. 1 nicht gezeigten Sicherung hinsichtlich einer Bewegung zu sichern. Die Ausnehmung 320 erstreckt sich hierbei entlang einer Erstreckungsrichtung, die bei dem in Fig. 1 gezeigten Linearsystems mit der Bewegungsrichtung übereinstimmt. Bei anderen Ausführungsbeispielen, wie sie weiter unten noch beschrieben werden, kann diese Erstreckungsrichtung jedoch auch in andere Richtungen weisen, wobei die weiter unten beschriebene senkrechte Erstreckung zu der Bewegungsrichtung nur eine Möglichkeit darstellt.

Die Ausnehmung 320 ist hierbei darüber hinaus so ausgeführt, dass sie auch an einer der Stirnfläche 350 gegenüberliegenden Stirnfläche diese durchdringt. Hierdurch ist es möglich, das Ausgleichsbauteil 360 auch von der anderen Stirnfläche aus zu erreichen und gegebenenfalls mechanisch zu fixieren bzw. zu sichern.

Das Ausgleichsbauteil 360 weist eine weitere Montagefläche 370 und ein Profil auf, wobei das Profil des Ausgleichsbauteils 360, welches der Ausnehmung 320 zugewandt ist, dem Profil der Ausnehmung entlang der ersten Richtung entspricht bzw. korrespondiert. Anders ausgedrückt weist auch das Ausgleichsbauteil 360 in dem der Ausnehmung 320 zugewandten Teil ein zumindest teilweises, wenn nicht vollständiges kreisbogenförmiges Profil auf. Hierdurch ist eine Verdrehung des Ausgleichsbauteils 360 senkrecht zu der ersten Richtung 330 möglich, sodass der Winkel w zwischen der Montagefläche 340 des Führungswagens 210 und der weiteren Montagefläche 370 an die Deformationen der Basisplatte 260 angepasst werden kann.

Aufgrund der geometrischen Ausformung des Ausgleichsbauteils 360 wird dieser auch als "halbkreisförmiger Zustellkeil" bezeichnet, auch wenn die Ausnehmung 320 und das Ausgleichsbauteil 360 entlang der zu der Bewegungsrichtung parallel verlaufenden Erstreckungsrichtung kein keilförmiges Profil aufweist.

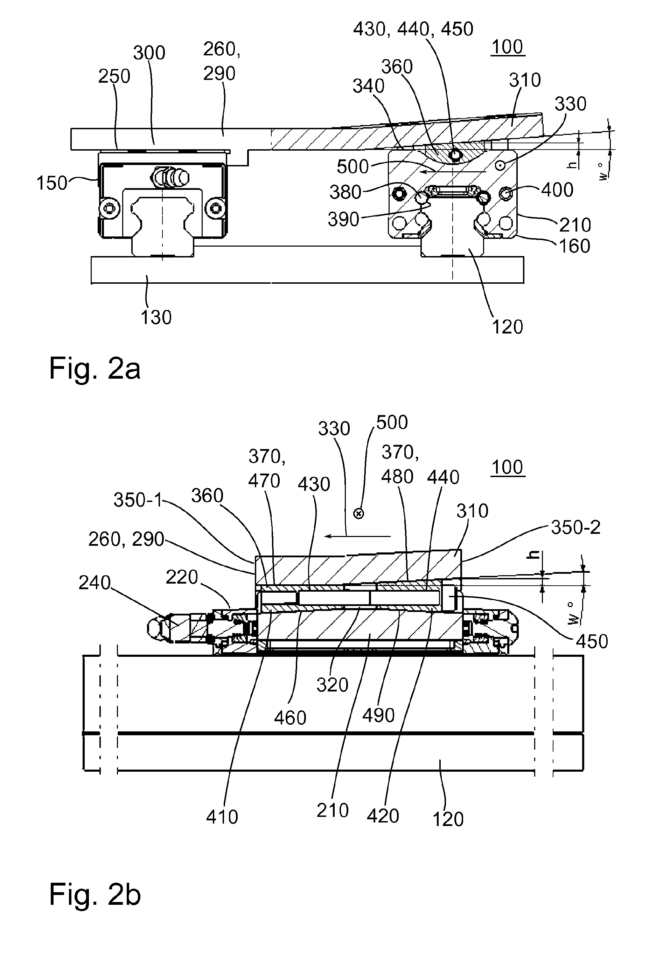

In den Figuren 2a und 2b ist ein weiteres Linearsystems 100 mit einem Profilschienenwagen 160 gemäß einem Ausführungsbeispiel gezeigt. Figur 2a zeigt hierbei eine Teilquerschnittsdarstellung, welche der in Fig. 1 gezeigten Darstellung ähnlich ist. Aus diesem Grund wird auf die ausführliche Beschreibung des Linearsystems 100 im Zusammenhang mit Fig. 1 und die Beschreibung der Profilschienenwagen 150, 160 im Zusammenhang mit Fig. 1 verwiesen.

So unterscheidet sich das Linearsystems 100 aus den Figuren 2a und 2b von dem in Fig. 1 gezeigten Linearsystems 100 im Wesentlichen hinsichtlich der Verformung der Basisplatte 260 und der genauen Ausgestaltung des Führungswagens 210 des zweiten Profilschienenwagens 160 gemäß einem Ausführungsbeispiel. Darüber hinaus ist in Figur 2a aufgrund der Teilquerschnittsdarstellung, die den zweiten Profilschienenwagens 160 senkrecht zu der Bewegungsrichtung im Bereich des Führungswagens 210 schneidet, auch die innere Struktur des Führungswagens 210 dargestellt. So zeigt Figur 2a, dass es sich bei dem Profilschienenwagen 160 gemäß einem Ausführungsbeispiel um einen 4-reihigen Profilschienenwagen handelt, der auf Basis kugelförmiger Wälzkörper arbeitet.

So weist der Profilschienenwagen 160 vier Rinnen 380 auf, in denen die Wälzkörper umlaufen und der Teil des Lastbereichs des Profilschienenwagens 160 ist. Die Rinnen 380 liegen hierbei Laufbahnen 390 der zweiten Profilschiene 120 gegenüber, zwischen denen die Wälzkörper abrollen und so die reibungsarme Führung entlang der Profilschiene 120 ermöglichen. Darüber hinaus zeigt Figur 2a vier weitere Bohrungen 400, welche für die vier Reihen von Wälzkörpern den Rücklaufbereich bilden, der zur Rückführung der Wälzkörper vorgesehen ist.

Wie bereits zuvor erwähnt wurde, weist die Basisplatte 260 eine abweichende Verbiegung von der Basisplatte 260 auf, wie sie in Fig. 1 gezeigt ist. So weist zwar die Basisplatte 260 aus Figur 2a und Fig. 2b ebenfalls einen ersten Abschnitt 300 auf, der im Wesentlichen plan und parallel zu der Montagefläche 250 des ersten Profilschienenwagens 150 verläuft. Im Unterschied zu der Basisplatte 260 aus Fig. 1 weist die Basisplatte 260 aus Figur 2a und Fig. 2b im zweiten Abschnitt 310 jedoch nicht nur eine Verbiegung senkrecht zu der Bewegungsrichtung der beiden Profilschienenwagen 150, 160 auf, sondern ebenso eine Verbiegung entlang der Bewegungsrichtung, wie dies insbesondere in Fig. 2b gezeigt ist.

Aus diesem Grund kommt bei dem in Fig. 2a und Fig. 2b gezeigten Linearsystem 100 ein anders geformtes Ausgleichsbauteil 360 zum Einsatz. Das Ausgleichsbauteil 360 ist bei diesem Ausführungsbeispiel mehrteilig mit einem ersten Ausgleichsteilbauteil 410 und einem zweiten Ausgleichsteilbauteil 420 ausgeführt. Die beiden Ausgleichsteilbauteile 410, 420 weisen jeweils eine Längsbohrung 430, 440 auf, durch die eine Schraube 450 geführt ist und die die beiden Ausgleichsteilbauteile 410, 420 miteinander verbindet. Die Längsbohrung 440 des ersten Ausgleichsteilbauteils 410 ist hierbei als Gewindebohrung ausgeführt.

Bei dem in den Figuren 2a und 2b gezeigten Linearsystem 100 verläuft darüber hinaus die erste Richtung 330 senkrecht zu der in Fig. 1 gezeigten ersten Richtung 330. Bei dem in den Figuren 2a und 2b gezeigten Linearsystem 100 verläuft diese parallel zu der Bewegungsrichtung der Profilschienenwagen 150, 160. Wie insbesondere Figur 2b zeigt, weist die Ausnehmung 320 in dem Führungswagen 210 entlang der ersten Richtung 330 in einem Bodenbereich einen Abschnitt 460 auf, der gegenüber der Montagefläche 340 (nicht gezeigte in Figur 2b) geneigt ist und mit dieser einen Winkel einschließt, der einen Maximalwinkel nicht übersteigt. Je nach Ausführungsform kann der Maximalwinkel 30°, 20°, 15° oder 10° betragen.

Die weitere Montagefläche 370 ist aufgrund der mehrteiligen Ausführung des Ausgleichsbauteils 360 ebenfalls in mehrere Abschnitte 470, 480 unterteilt. Ein erster Abschnitt 470 der weiteren Montagefläche 370 erstreckt sich hierbei im Wesentlichen parallel zu der in Fig. 2b nicht gezeigten Montagefläche 340. Durch eine Bewegung des ersten Ausgleichsteilbauteils 410 entlang der ersten Richtung 330 kann so ein Abstand zwischen der weiteren Montagefläche 370 bzw. ihrem ersten Abschnitt 470 und der Montagefläche 340 an eine Deformationen der Basisplatte 260 angepasst werden.

Die Ausnehmung 320 weist darüber hinaus in einem weiteren Abschnitt 490 ein Profil auf, das ebenfalls gegenüber der Montagefläche 340 des Führungswagens 210 geneigt ist und mit dieser einen weiteren Winkel einschließt, der den zuvor genannten Maximalwinkel nicht übersteigt. Das Profil des Abschnitts 460 und das Profil des weiteren Abschnitts 490 laufen hierbei aufeinander zu. Bei der in Fig. 2b gezeigten Situation sind diese optional spiegelsymmetrisch ausgestaltet und optional zu einer in Fig. 2b nicht gezeigten Mittellinie des Führungswagens 210 angeordnet. Wie bereits eingangs erläutert wurde, ist hierdurch eine symmetrischere Belastung des Führungswagens 210 und damit des zweiten Profilschienenwagens 160 erreichbar.

Die Ausnehmung 320 erstreckt sich bei dem in Figur 2b gezeigten Ausführungsbeispiel eines Profilschienenwagens 160 im Übrigen zwischen beiden, einander gegenüberliegenden Stirnflächen 350-1 und 350-2. Hierdurch ist, wie zuvor erläutert wurde, das Ausgleichsbauteil 360 von beiden Stirnflächen aus auch im eingebauten Zustand erreichbar.

Darüber hinaus zeigt Fig. 2b, dass die Ausnehmung 320 derart ausgestaltet ist, dass auch die Endplatte 220 mit ihrem Schmiermittelnippel 240 und ihr entsprechendes Gegenstück, das in Figur 2b nicht mit einem Bezugszeichen gekennzeichnet ist, die Ausnehmung 320 höchstens minimal überdecken, sodass insbesondere die Schraube 450 des Ausgleichsbauteils 360 auch im eingebauten Zustand erreichbar ist.

Das zweite Ausgleichsteilbauteil 420 weist an einer der Ausnehmung 320 zugewandten Seite ebenfalls eine dem Profil der Ausnehmung des Führungswagens 210 entsprechendes Profil auf.

Hinsichtlich der weiteren Montagefläche 370 unterscheidet sich der zweite Abschnitt 480 jedoch von dem ersten Abschnitt 470 der weiteren Montagefläche 370. So schließt der zweite Abschnitt 480 mit der in Fig. 2b nicht gezeigten Montagefläche 340 ebenfalls entlang der ersten Richtung 330, also im vorliegenden Fall entlang der Bewegungsrichtung, einen Winkel ein, durch den auch die Verbiegung der Platte 260 entlang der ersten Richtung bzw. der Bewegungsrichtung der Profilschienenwagen 110, 120 vollständig, zumindest jedoch teilweise ausgeglichen werden kann. Auch hier ist durch eine Verschiebung des zweiten Ausgleichsteilbauteils 420 eine entsprechende Anpassung des Abstands in vertikaler Richtung, also eines Punktes des zweiten Abschnitts 480 der weiteren Montagefläche 370 und der Montagefläche 340 möglich.

Nach einem Bereitstellen der beiden Profilschienen 110, 120 und der Profilschienenwagen 150, 160 auf den beiden Profilschienen 110, 120 sowie des Verbindens des weiteren Bauteils 290 und seiner Basisplatte 260 mit der Montagefläche 250 des ersten Profilschienenwagens 150 kann so durch eine Einstellung der Schraube 450 das Ausgleichsbauteil 360 des zweiten Profilschienenwagens 160 ausgerichtet werden, um das weitere Bauteil 390 mit der weiteren Montagefläche 370 des zweiten Profilschienenwagens 160 mechanisch zu verbinden. Hierbei kann durch eine Verschiebung des ersten und des zweiten Ausgleichsteilbauteils 410, 420 sowohl eine Anpassung hinsichtlich des Abstandes der weiteren Montagefläche 370 an die Basisplatte 260, als auch an die zusätzliche Verbiegung entlang der Bewegungsrichtung, also entlang der ersten Richtung 330 erfolgen. Das in Fig. 2 gezeigte Ausführungsbeispiel ermöglicht so eine Verspannung des Ausgleichsbauteils 360 zwischen dem Führungswagen 210 des zweiten Profilschienenwagens 160 gemäß einem Ausführungsbeispiel und dem weiteren Bauteil 290 bzw. seiner Basisplatte 260. Hierdurch ist eine Anpassung oder Adaption an die in zwei Richtungen verbogene Platte 260 mithilfe des Ausgleichsbauteils 360 möglich, der auch als "halbkreisförmiger Ausgleichskeil" bezeichnet wird.

Optional kann darüber hinaus die Ausnehmung 320 entlang einer zweiten Richtung 500, die nicht mit der ersten Richtung 330 übereinstimmt, ebenfalls ein Profil aufweisen, das kreisbogenförmige entlang der zweiten Richtung ist. Entsprechend kann das Ausgleichsbauteil 360 bzw. seine Ausgleichsteilbauteil 410, 420 entsprechend entlang der zweiten Richtung ein entsprechendes Profil an der der Ausnehmung zugewandten Seite aufweisen, sodass zusätzlich eine Anpassung oder Kompensation eines Winkels der verbogenen Platte 260, also der zugehörigen Montageflächen 340,300 entlang der zweiten Richtung 500 möglich ist.

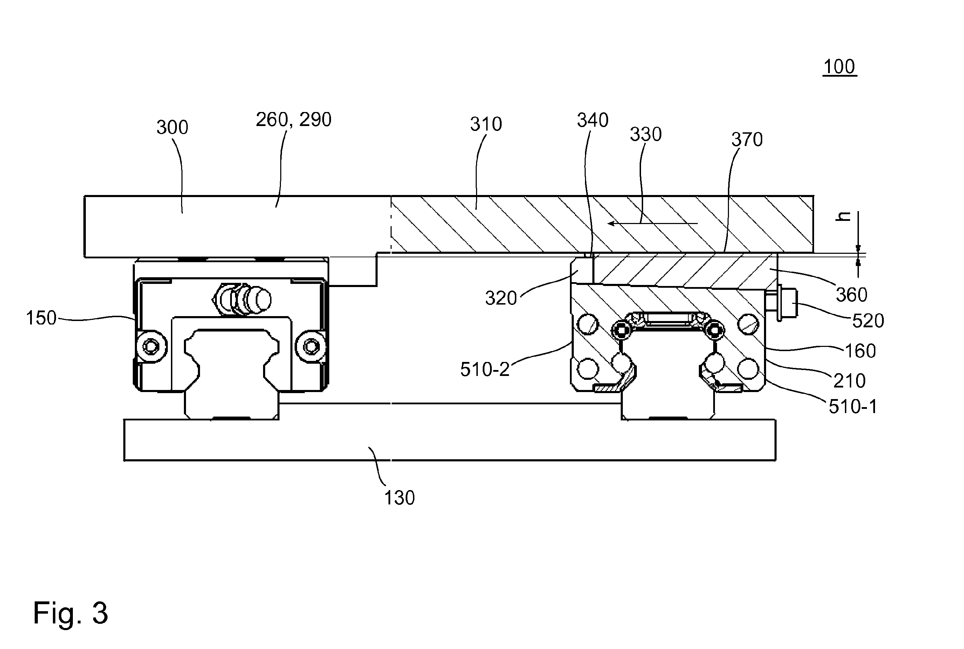

Fig. 3 zeigt eine Teilquerschnittsdarstellung eines Linearsystems 100 mit einem Profilschienenwagen 160 gemäß einem weiteren Ausführungsbeispiel. Bei dem Profilschienenwagen 160 aus Fig. 3 weist der Führungswagen 210 eine keilförmige Ausnehmung 320 auf, bei der die Ausnehmung entlang der ersten Richtung 330 in einem Bodenbereich in wenigstens einem Abschnitt ein Profil aufweist, das gegenüber der Montagefläche 340 geneigt ist und mit dieser einen Winkel einschließt, der den zuvor genannten Maximalwinkel nicht übersteigt. Die erste Richtung 330 weist hierbei im Unterschied zu den bisher gezeigten Ausführungsbeispiele nicht entlang der Bewegungsrichtung der Profilschienenwagen 150, 160, die durch die Orientierung der Profilschienen 110, 120 gegeben ist, sondern verläuft vielmehr in einer abweichenden, im vorliegenden Fall senkrechten Richtung zu dieser.

Entsprechend der Orientierung der ersten Richtung 330, die im vorliegenden Fall mit der Erstreckungsrichtung der Ausnehmung 320 übereinstimmt, erstreckt sich bei diesem Ausführungsbeispiel die Ausnehmung 320 ausgehend von einer Seitenfläche 510-1 in den Führungswagen 210 hinein. Genauer gesagt erstreckt sich bei dem in Fig. 3 gezeigten Ausführungsbeispiel die Ausnehmung sogar durch den Führungswagen 210 entlang der Erstreckungsrichtung, sodass die Ausnehmung sich ausgehend von beiden Seitenflächen 510-1 und 510-2, die einander gegenüberliegenden und den Führungswagen 210 an gegenüberliegenden Seiten begrenzen, in das Innere des Führungswagens 210 hinein.

Das Ausgleichsbauteil 360 weist entsprechend an einer der Ausnehmung zugewandten Seite ein dem Profil der Ausnehmung 120 entsprechendes oder korrespondierendes Profil auf. Ebenso weist das Ausgleichsbauteil 360 wiederum eine weitere Montagefläche 370 auf, die bei dem in Fig. 3 gezeigten Ausführungsbeispiel parallel zu der Montagefläche 340 verläuft. Hierdurch ist es möglich, durch ein seitliches Verschieben des Ausgleichsbauteils 360 zu dem Führungswagen 210 des zweiten Profilschienenwagens 160 einen Abstand der weiteren Montagefläche 370 zu der Montagefläche 340 anzupassen, um einen Höhenunterschied h auszugleichen, der zwischen dem ersten und dem zweiten Abschnitt 300, 310 der Basisplatte 260 des weiteren Bauteils 290 herrscht.

Um im Falle einer Erschütterung ein Verrutschen des Ausgleichsbauteils 360, also des Keils in dem Profilschienenwagen 160 zu unterbinden und damit die Adaption der Platte 260 mit dem Höhenversatz h auch bei Vibrationen und anderen Erschütterungen sicherzustellen, weist der Führungswagen 210 in seiner Seitenfläche 510-1 eine Gewindebohrung auf, über die mithilfe eines Kopfs einer Schraube 520 als Sicherung eine Bewegung des Ausgleichsbauteils 360 in Richtung der Seitenfläche 510-1 unterbunden ist. Optional kann durch den Einsatz einer weiteren Bohrung in der gegenüberliegenden Seitenfläche 510-2 und den Einsatz eines entsprechenden Sicherungsbauteils gegebenenfalls auch eine Sicherung gegen einer Verschiebung des Ausgleichsbauteils 360 in der entgegengesetzten Richtung, also zu der Seitenfläche 510-2 hin erzielt werden.

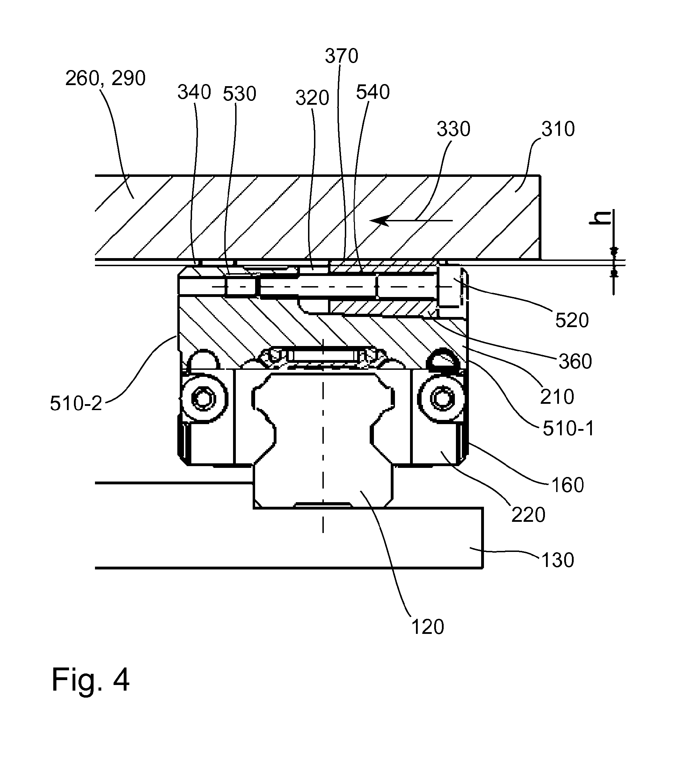

Fig. 4 zeigt einen Profilschienenwagen 160 gemäß einem Ausführungsbeispiel. Der Profilschienenwagen 160 unterscheidet sich hierbei von dem in Fig. 3 gezeigten lediglich in der Ausgestaltung der Ausnehmung 320, des Ausgleichsbauteils 360 und der Ausgestaltung der Sicherung, um eine Bewegung des Ausgleichsbauteils durch eine Erschütterung zu unterbinden oder zu reduzieren. Fig. 4 zeigt somit eine Variante des Keils aus Fig. 3 zur Kompensation des Höhenvorsatzes h.

Im Unterschied zu dem in Fig. 3 gezeigten Ausführungsbeispiel eines Profilschienenwagens 160 erstreckt sich zwar die Ausnehmung 320 des in Fig. 4 gezeigten Profilschienenwagens 160 ebenfalls ausgehend von der Seitenfläche 510-1 in das Innere des Führungswagens 210 hinein, erstreckt sich jedoch nicht bis zu der gegenüberliegenden Seitenfläche 510-2. Die Ausnehmung 320 erstreckt sich vielmehr ausgehend von der Seitenfläche 510-1 lediglich knapp über die Hälfte in das Innere des Führungswagens 210 hinein. Der Führungswagen 210 umfasst ferner eine Gewindebohrung 530, die eine Schraube 520 zur mechanischen Fixierung bzw. zur Sicherung des Ausgleichsbauteils 360 aufnehmen kann. Zu diesem Zweck weist das Ausgleichsbauteil 360 eine Bohrung 540 mit einem Durchmesser auf, in der es auch im Falle eines durch die kreisförmige Ausnehmung, wie sie zuvor beschrieben wurde, bedingten Versatzes in vertikaler Richtung, durch den der Abstand zwischen der weiteren Montagefläche 370 und der Montagefläche 340 geändert wird, eine Sicherung des Ausgleichsbauteils 360 ohne Scherkräfte auf die Schraube 520 auszuüben.

Im Unterschied zu dem in Fig. 3 gezeigten Ausführungsbeispiel wird also der Kopf der Schraube 520 so angebracht, dass diese nicht mehr über die Seitenfläche 510-1 herausragt. Dies kann insbesondere dann von Vorteil sein, wenn der Profilschienenwagen 160 in lateral beengten Räumen zum Einsatz kommt. Allerdings reduziert sich aufgrund der bei dieser Ausführungsform verwendeten Sicherung mithilfe der Gewindebohrung 530 der zur Verfügung stehende Bauraum für das Ausgleichsbauteil 360, sodass die weitere Montagefläche gegenüber der in Fig. 3 gezeigten Variante gegebenenfalls kleiner ausfallen kann.

Sicherungen, wie sie beispielsweise durch die Gewindebohrung 530 und die Schraube 520 bei dem in Fig. 4 gezeigten Ausführungsbeispiel umgesetzt sind, können grundsätzlich auch bei den zuvor beschriebenen Ausführungsbeispielen optional zum Einsatz kommen. Es können jedoch auch andere Sicherungsmaßnahmen implementiert werden, die beispielsweise auf Basis von Sicherungsblechen oder anderen Sicherungsbauteilen basieren.

So kann beispielsweise bei dem in Fig. 1 gezeigten Ausführungsbeispiel eine entsprechende Schraube und eine entsprechende Gewindebohrung in dem Ausgleichsbauteil 360 vorgesehen werden, an denen sich bei dem in Fig. 2a gezeigten Ausführungsbeispiel die Längsbohrungen 430, 440 und die Schraube 450 befinden. Aber auch in einem Bereich zwischen der Ausnehmung 320 und einem Bereich, indem die Profilschiene 110, 120 im Inneren des Führungswagens 210 laufen, kann gegebenenfalls eine entsprechende Gewindebohrung zur Sicherung vorgesehen werden.

Alternativ oder ergänzend kann selbstverständlich das Ausgleichsbauteil auch mithilfe einer stoffschlüssigen Verbindung, beispielsweise eine Verklebung mit dem Führungswagen 210 verbunden werden. Hierbei bezeichnen stoffschlüssige Verbindungen alle Verbindungen, bei denen die Verbindungspartner durch atomare oder molekulare Kräfte zusammengehalten werden. Sie sind häufig nicht lösbare Verbindungen, die sich nur durch Zerstörung der Verbindungsmittel trennen lassen. Beispiele umfassen so ein Kleben, Löten und Verschweißen der Verbindungspartner.

Ausführungsbeispiele ermöglichen so ein Design mit zusätzlichen Ausgleichselementen dem Keil-Prinzip folgend, welche gegebenenfalls in den Profilschienenwagen integriert werden können. Bei der Montage des Linearsystems können diese Keile dann entsprechend justiert werden. Dies kann durch eine einfache Zustelloperation erfolgen, welche jeder geübte Monteur beherrschen sollte.

Ausführungsbeispiele können so innere, negative Vorbelastungen der Führung gegebenenfalls vermeiden. Ebenso können Umgebungsbauteil, wie die Basisplatte oder andere Bauteile, "entfeinert" verwendet werden, also mit großzügigeren Toleranzen produziert werden, was zu einem Kostenvorteil führen kann. Ebenso können Ausführungsbeispiele gegebenenfalls zu einer verbesserten bzw. unempfindlichere Laufleistung (Laufperformance) beitragen und diese erreichen.

Ausführungsbeispiele umfassen so Profilschienenwagen mithilfe einer Umbauadaption, die eine Anpassung an Deformationen und andere Unvollkommenheiten eines Linearsystems ermöglichen, wie sie in der Realität häufig auftreten können.

Während die bisherigen Ausführungsbeispiele im Zusammenhang mit Wälzlager-basierten Profilschienenwagen beschrieben wurde, können Ausführungsbeispiele selbstverständlich ebenfalls auf Basis von Gleitlagern implementiert werden. Auch sind bisher lediglich Ausführungsbeispiel beschrieben worden, bei denen zwei Profilschienen gezeigt wurden. Ausführungsbeispiele sind jedoch bei weitem nicht auf das Bereitstellen eines Linearsystems mit zwei Profilschienen beschränkt. So können grundsätzlich beliebige Anzahlen von Profilschienen im Rahmen von Linearsysteme mit Profilschienenwagen gemäß Ausführungsbeispielen eingesetzt und gemäß einem Ausführungsbeispiel eines Verfahrens zur Montage eines Linearsystems verwendet werden. So können beispielsweise Deformationen und andere Unvollkommenheiten auch im Falle von Profilschienenwagen kompensiert werden, die auf der gleichen Profilschiene laufen. Auch wenn also zuvor ausschließlich Ausführungsbeispiele und Linearsysteme beschrieben wurden, bei denen zwei Profilschienen zum Einsatz kamen, sind Ausführungsbeispiele von Profilschienenwagen und Ausführungsbeispiel eines Verfahrens zur Montage eines Linearsystems bei weitem nicht auf diese Anzahl von Profilschienen beschränkt.

Einem Ausführungsbeispiel eines Verfahrens zur Montage eines Linearsystems kann ein Ausrichten des Ausgleichsbauteils also beispielsweise ein Verschieben des Ausgleichsbauteils entlang der ersten Richtung 330, entlang der zweiten Richtung 500, entlang der Bewegungsrichtung oder entlang einer anderen Richtung, beispielsweise der Erstreckungsrichtung der Ausnehmung 320 umfassen. Ebenso kann ein Ausrichten des Ausgleichsbauteils 360 ein Verkippen desselben oder ein Verdrehen desselben umfassen.

Die in der vorstehenden Beschreibung, den Ansprüchen und den Zeichnungen offenbarten Merkmale können sowohl einzeln als auch in beliebiger Kombination für die Verwirklichung von Ausführungsbeispielen in ihren verschiedenen Ausgestaltungen von Bedeutung sein und - soweit sich nicht aus der Beschreibung etwas anderes ergibt - beliebig miteinander kombiniert werden.

### Bezugszeichenliste

- 100: Linearsystems
- 110: erste Profilschiene
- 120: zweite Profilschiene
- 130: Grundplatte
- 140: Flanke
- 150: erster Profilschienenwagen
- 160: zweiter Profilschienenwagen
- 170: Führungswagen
- 180: Endplatte
- 190: Schraube
- 200: Schmiermittelnippel
- 210: Führungswagen
- 220: Endplatte
- 230: Schraube
- 240: Schmiermittelnippel
- 250: Montagefläche
- 260: Basisplatte
- 270: seitliche Anlagefläche
- 280: seitlicher Anschlag
- 290: weiteres Bauteil
- 300: erster Abschnitt
- 310: zweiter Abschnitt
- 320: Ausnehmung
- 330: erste Richtung
- 340: Montagefläche
- 350: Stirnfläche
- 360: Ausgleichsbauteil
- 370: weitere Montagefläche
- 380: Rinne
- 390: Laufbahn
- 400: weitere Bohrung
- 410: erstes Ausgleichsteilbauteil
- 420: zweites Ausgleichsteilbauteil
- 430: Längsbohrung
- 440: Längsbohrung
- 450: Schraube
- 460: Abschnitt
- 470: erster Abschnitt
- 480: zweiter Abschnitt
- 490: weiterer Abschnitt
- 500: zweite Richtung
- 510: Seitenfläche
- 520: Schraube
- 530: Gewindebohrung
- 540: Bohrung

## Patentansprüche

1. Profilschienenwagen (160), der ausgebildet ist, um auf einer Profilschiene (120) linear beweglich angeordnet zu werden, mit folgenden Merkmalen:
einem Führungswagen (210) mit einer Montagefläche (340) zum mechanischen Verbinden des Führungswagens (210) mit einem anderen Bauteil (290), wobei der Führungswagen (210) in der Montagefläche (340) eine Ausnehmung (320) aufweist,
wobei die Ausnehmung (320) entlang einer parallel zu der Montagefläche verlaufenden ersten Richtung (330) ein kreisbogenförmiges Profil aufweist,
oder
wobei die Ausnehmung (320) entlang der ersten Richtung (330) in einem Bodenbereich in wenigstens einem Abschnitt ein Profil aufweist, das gegenüber der Montagefläche (340) geneigt ist und mit dieser einen Winkel einschließt, der 30° nicht übersteigt,
sodass in die Ausnehmung (320) ein Ausgleichsbauteil (360) mit einer weiteren Montagefläche (370) und mit einem dem Profil der Ausnehmung (320) des Führungswagens (210) entsprechenden Profil einsetzbar ist, sodass durch ein Ausrichten des Ausgleichsbauteils (360) zu dem Führungswagen (210) ein Winkel und/oder ein Abstand zwischen der Montagefläche (340) und der weiteren Montagefläche (370) anpassbar ist.

2. Profilschienenwagen (160) nach Anspruch 1, bei dem die Ausnehmung (320) entlang der ersten Richtung (330) in dem Bodenbereich in wenigstens dem einen Abschnitt ein Profil aufweist, das gegenüber der Montagefläche (340) geneigt ist und mit dieser einen 30° nicht übersteigenden Winkel einschließt, und bei dem der Profilschienenwagen (160) entlang einer parallel zu der Montagefläche (340) verlaufenden zweiten Richtung (500), die von der ersten Richtung (330) verschieden ist, ein kreisbogenförmiges Profil aufweist.

3. Profilschienenwagen (160) nach einem der vorhergehenden Ansprüche, bei dem die Ausnehmung (320) entlang der ersten Richtung (330) in dem Bodenbereich in dem Abschnitt (460) ein Profil aufweist, das gegenüber der Montagefläche (340) geneigt ist und mit dieser einen 30° nicht übersteigenden Winkel einschließt, und wobei die Ausnehmung (320) entlang der ersten Richtung (330) in dem Bodenbereich einen weiteren Abschnitt (490) mit einem Profil aufweist, das ebenfalls gegenüber der Montagefläche (340) geneigt ist und mit dieser einen 30° nicht übersteigenden weiteren Winkel einschließt, wobei das Profil des Abschnitts (460) und das Profil des weiteren Abschnitts (490) aufeinander zulaufen.

4. Profilschienenwagen (160) nach Anspruch 4, bei dem der Abschnitt (460) des Bodenbereichs und der weitere Abschnitt (490) des Bodenbereichs spiegelsymmetrisch ausgestaltet sind.

5. Profilschienenwagen (160) nach einem der vorhergehenden Ansprüche, bei dem sich die Ausnehmung (320) ausgehend von einer Seitenfläche (510) des Führungswagens oder einer Stirnfläche (350) des Führungswagens (210) in diesen hinein erstreckt.

6. Profilschienenwagen (160) nach einem der vorhergehenden Ansprüche, der das Ausgleichsbauteil (360) umfasst.

7. Profilschienenwagen (160) nach einem der vorhergehenden Ansprüche, bei dem das Ausgleichsbauteil (360) derart mehrteilig ausgeführt ist, dass die weitere Montagefläche (370) wenigstens zwei Abschnitte (470, 480) aufweist, die durch unterschiedliche Ausgleichsteilbauteile (410, 420) des Ausgleichsbauteils (360) gebildet werden.

8. Profilschienenwagen (120) nach einem der Ansprüche 6 oder 7, bei dem die weitere Montagefläche (370) wenigstens in einem Abschnitt (470) entlang der ersten Richtung (330) ein Profil aufweist, das im Wesentlichen parallel zu der Montagefläche (340) entlang der ersten Richtung (330) des Führungswagens (210) verläuft.

9. Profilschienenwagen (120) nach Anspruch 8, bei dem die weitere Montagefläche (370) in einem weiteren Abschnitt (480) entlang der ersten Richtung (330) ein Profil aufweist, das zu dem Profil der Montagefläche (340) entlang der ersten Richtung (330) geneigt ist.

10. Verfahren zur Montage eines Linearsystems (100) mit einem weiteren Bauteil (390), umfassend:
Bereitstellen wenigstens einer Profilschiene (120);
Bereitstellen eines ersten (150) und eines zweiten Profilschienenwagens (150) auf der wenigstens einen Profilschiene, wobei wenigstens der zweite Profilschienenwagen (160) ein Profilschienenwagen gemäß einem der vorhergehenden Ansprüche ist und ein Ausgleichsbauteil (360) umfasst;
Verbinden des weiteren Bauteils (290) mit einer Montagefläche (250) des ersten Profilschienenwagens (150); und
Ausrichten des Ausgleichsbauteils (360) des zweiten Profilschienenwagens (160), um das weitere Bauteil (290) mit der weiteren Montagefläche (370) des zweiten Profilschienenwagens (160) mechanisch zu verbinden, nachdem das weitere Bauteil (290) mit der Montagefläche (250) des erste Profilschienenwagens (150) verbunden wurde und ohne dass die mechanische Verbindung zwischen dem weiteren Bauteil (290) und der Montagefläche (250) des ersten Profilschienenwagens (150) gelöst wird.
